# EUROPEAN PATENT SPECIFICATION

(11) **EP 1 675 472 B1**
(45) Date of publication and mention of the grant of the patent: **06.05.2009**
(21) Application number: 04770790.6
(22) Date of filing: 15.09.2004
(51) Int. Cl.: A23G 3/20, A23G 3/28, A21C 15/00

(54) **MACHINE FOR DECORATING A FOOD PRODUCT, IN PARTICULAR A CAKE, WITH AN INGREDIENT IN GRANULAR FORM**
MASCHINE ZUR VERZIERUNG EINES LEBENSMITTELS, INSBESONDERE EINES KUCHENS, MIT EINER ZUTAT IN KÖRNIGER FORM
MACHINE DE DECORATION D'UN PRODUIT ALIMENTAIRE, NOTAMMENT UN GATEAU, AVEC UN INGREDIENT DE FORME GRANULAIRE

(30) Priority: 03.10.2003 IT PD20030230
(43) Date of publication of application: 05.07.2006
(73) Proprietor: COMAS S.p.A., 36030 Pievebelvicino (IT)
(72) Inventor: VISONA', Stefano, I-36015 Schio (IT)
(74) Representative: Gallo, Luca
(86) International application number: PCT/IT2004/000496
(87) International publication number: WO 2005/032267

(56) References cited:
- EP-A- 0 551 949
- EP-A- 0 791 294
- US-A- 2 553 191
- US-A- 2 569 886
- US-A- 3 717 752
- US-A- 4 292 917

## Description

### Technical field

The present invention relates to a machine for decorating a food product, in particular a cake, with an ingredient in granular form.

The machine forming the subject of the present invention may be advantageously used in the food sector for distributing various types of ingredients in granular form, such as granulated almond, chocolate or coconut flakes, icing sugar or the like, onto substantially vertical or oblique portions of food products, in particular cakes or other confectionary items.

"Ingredient in granular form" is understood as indicating generally any type of food ingredient which is fragmented or formed into minutes particles of any shape and size.

### Background art

As is known, a type of decoration which is widely used for cakes or for similar confectionary products consists in ingredients in granular form distributed over parts of cakes previously coated, for example, with a layer of cream. Document US 3,717,752 discloses an example of a machine for decorating such a food product with a granular ingredient.

Distribution may be performed both on the top portion of the cakes and on the side portion thereof. Application of the granular ingredients onto the top part of the cakes does not require any special operations since it is easy to perform. Application, however, of this type of ingredient onto side portions of the cake which are generally vertical or in any case inclined is more difficult since it requires good manual skill and expertise.

In some cases, moreover, it is required to perform distribution solely over the sides of the cake, leaving the top part free of the granular ingredient.

At present, also in the case of production on an industrial level, this type of decoration is performed mainly by means of manual operations and more rarely using semi-automatic systems, which nevertheless require dedicated and specialized labour.

Traditionally, an operator uses, for manual distribution of these granular ingredients on the cakes, a simple device provided with a tray for collecting the granular ingredient. An idle rotating plate is situated in the centre of this tray, on top of a support stem, and receives a cake to be decorated, arranged on top. The operator turns the cake with one hand and with the other hand picks up a certain quantity of granular ingredient from the tray and moving his/her hand closer fills up the sides of the cake with this ingredient so that the cake, during its rotational movement, incorporates part of this ingredient into the outer layer coated with a layer of cream.

The drawback of this method lies mainly in the high cost of the labour together, generally, with the low productivity of this type of processing operation.

Also known is a system for distributing ingredients in granular form (referred to below as "granular product") which envisages performing the operation in an automatic manner directly along the line for production of the cakes to be decorated. The cakes are transported on a transportation line close to a large mound of granular product so that they are able to interfere with it tangentially. The transportation line consists of two conveyor belts which are arranged alongside each other and travel at different speeds. The cakes are positioned halfway between the two belts so that the difference in speed between the two belts causes rotation of the said cakes so that the entire side surface of the cakes may come into contact with the mound of granular product. The latter is usually situated alongside the slower conveyor belt.

This automatic system has numerous drawbacks. Firstly, with said system it is possible to obtain only a band of granular product with a limited and non-uniform height since the mound of granular product is unable to provide a vertical wall of granular product facing the cake. Secondly, large quantities of granular product fall from the cakes, also as a result of the movement of the conveyor belt, with the consequent need for recovery and recycling of the said granular product. In addition, the granular product which is not incorporated in the layers of cream of the cakes or which falls to the ground may be soiled and thus be difficult to recycle.

### Disclosure of the invention

In this situation, therefore, the object of the present invention is to eliminate the drawbacks of the prior art mentioned above, by providing a machine for decorating a food product with an ingredient in granular form which allows a uniform distribution of granular product on the side surface of the food product.

A further object of the present invention is to provide a machine which is able to decorate food products, and in particular cakes, of any height.

Another object of the present invention is to provide an automated machine to be inserted along a line for the production of cakes or similar products.

These and other objects are all achieved by a decorating machine according to the accompanying claims.

### Brief description of the drawings

The technical features of the invention, in accordance with the abovementioned objects, may be clearly determined from the contents of the claims included below and the advantages thereof will emerge more clearly from the detailed description which follows, provided with reference to the accompanying drawings which show a purely exemplary and non-limiting embodiment thereof in which:
- Figure 1 shows a partially sectioned overall view of the machine according to the invention;
- Figure 2 shows a top plan view of the machine according to the invention with some parts removed so that other parts are more clearly visible;
- Figure 3 shows a top plan view of the means for distributing ingredients in granular form according to the invention;
- Figure 4 shows a side view of the distribution means according to the invention.

### Detailed description

For the sake of convenience and simplicity of description, below reference will be made to a cake T, for the food product to be decorated, and to a granular product G, in particular consisting of almonds, for the ingredient in granular form. The reference to a cake T must not be regarded as limiting, since the cake T in reality may be a food product of any type and form, such as for example pies or pastries. The same is also applicable to the reference to granulated almonds which in reality may be replaced by an ingredient in any particle form which can be used for decoration, such as for example chocolate or coconut flakes, icing sugar and the like.

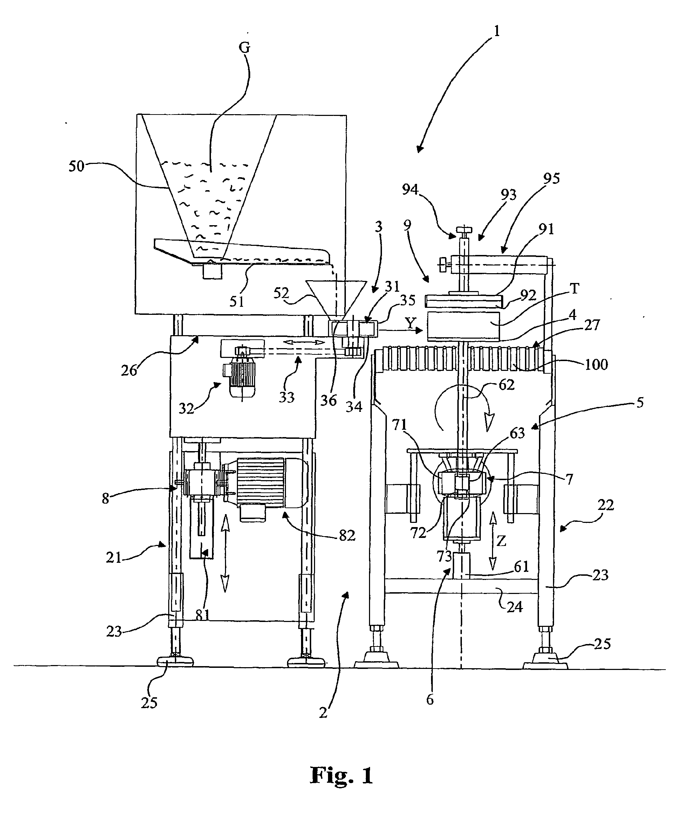

With reference to Figures 1 to 4, 1 denotes in its entirety a machine according to the invention for decorating a food product, in particular a cake T, with an ingredient in granular form such as, for example, granulated almonds G.

Such a machine 1 has firstly a support structure 2.

With reference to the embodiment illustrated in Figure 1, the support structure 2 consists of a first framework 21 and a second framework 22, which are both formed by four support columns 23 which are arranged at the corners of a quadrilateral and are connected together by horizontal cross-members 24. The support columns 23 rest on the ground by means of adjustable feet 25.

Distribution means 3 are mounted on the first framework 21 so as to generate a uniform flow of granular product G suitably directed onto the surface of the cake T to be decorated, in a direction Y which is preferably horizontal.

In more detail, according to the embodiment illustrated in the accompanying figures, the means 3 for distributing the granular product G consist of a rotor 31 which is operated by first motor means 32 via flexible transmission means 33, such as for example a belt or a chain.

The rotor 31 is mounted on a first horizontal surface 26 supported by the first framework 21 and is operated by the first motor means 32 which are also fixed to the same framework 21.

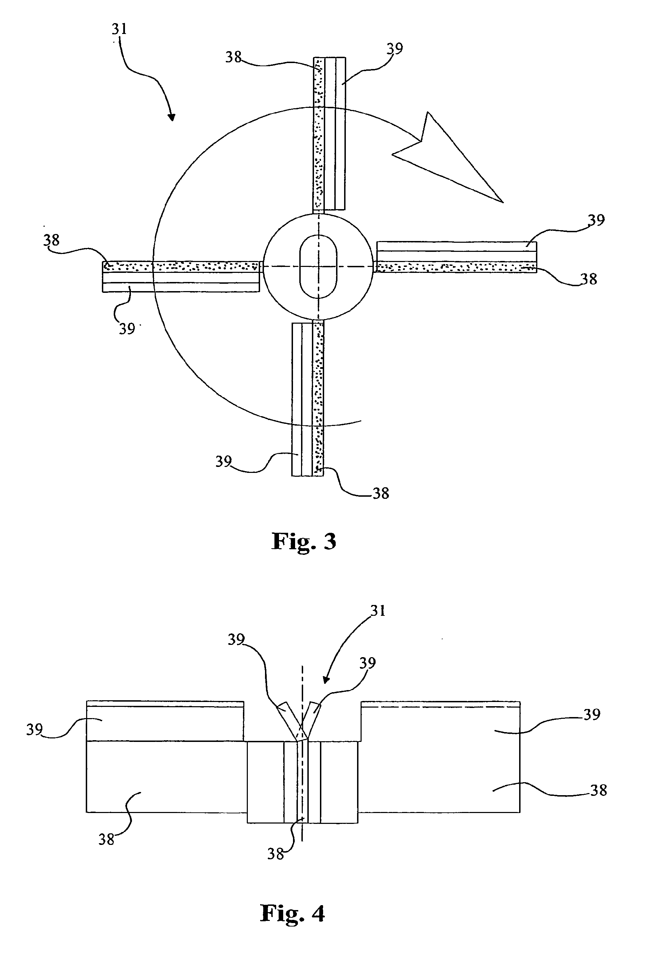

This rotor is seated inside a housing 34 which has a delivery mouth 35 for forming a flow of granular product G and an opening 36 for supplying the rotor with the said granular product G. The rotor is provided with a plurality of radial blades 37 which, in accordance with the embodiment shown, are four in number. In Figures 3 and 4 it can be seen in detail that these radial blades 37 are each formed with a first portion 38, which extends along the lie of a radial plane parallel to the axis of rotation, and second portion 39 which is inclined with respect to the first portion, with a different inclination and orientation of the adjacent blades. The different orientation of the adjacent blades of the second portions 39 produces an intense vortical effect inside the said rotor 31, thus allowing the generation of a uniform flow along the whole extension of the delivery mouth 35.

The second framework 22 has, mounted at the top, a support base 4 intended to support the cake T which must be decorated with the granular product G in the vicinity of the abovementioned distribution means 3.

Movement means 5 integral with the said second framework 22 and mechanically connected to the support base 4 are also envisaged, thereby producing a substantially vertical rotational movement Z preferably perpendicular to the direction Y of the flow of granular product G.

In more detail, the means 5 for moving the support base 4 comprise translation means 6 and rotation means 7.

The translation means 6 move the support base 4 between a rest position, where the cake T may be loaded or unloaded onto/from the said support base 4, and an operating position where the cake T is situated in the vicinity of the distribution means 3 and therefore in such a way as to interfere with the flow of granular product G produced by said means.

The rotation means 7 cause rotation of the support base 4 and therefore the cake T loaded onto it. Preferably the rotation means 7 impart the rotational movement to the support base 4 only when it is in the operating position defined above. By means of several turns of the support base 4, the entire surface of the cake T may be exposed several times to the flow of granular product G, obtaining moreover an improved distribution of the granular product G over the said surface.

According to the preferred embodiment illustrated in the accompanying figures, the translation means 6 consist of a pneumatic actuator 61 comprising a central transmission shaft 62 connected at the top to the support base 4.

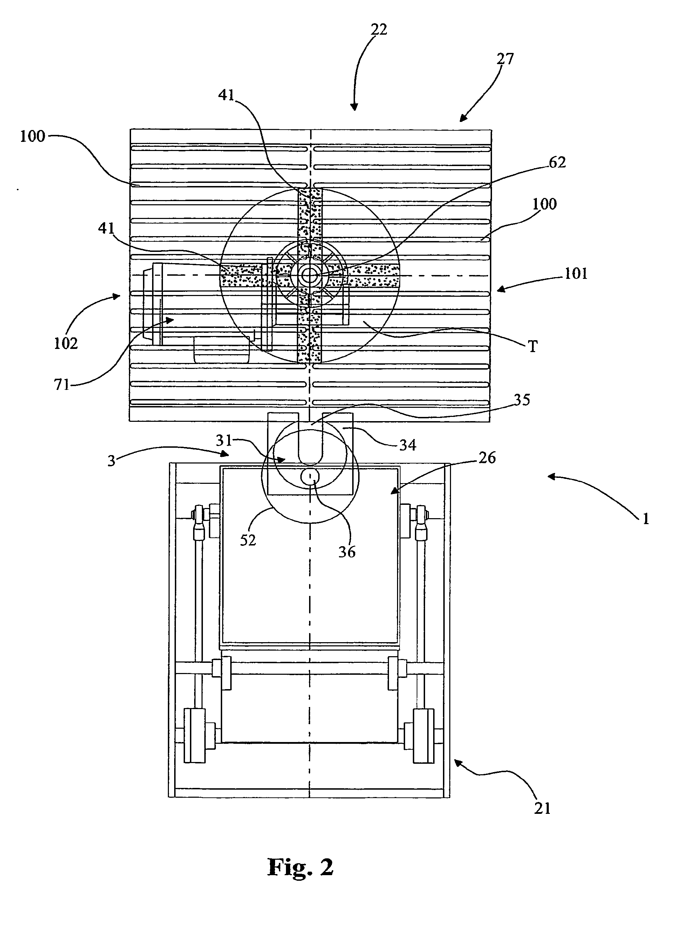

As can be seen in Figure 2, the support base 4 is in particular formed by four arms 41 which are arranged in the form of a cross and connected at one end to the top of the central shaft 62 and which define a second horizontal surface 27 basically also supported by the second framework 22.

The rotation means consist of second motor means 71 actuating a hollow shaft 72 provided internally with a guide 73. The central shaft 62 which is connected to the support base 4 slides coaxially with said hollow shaft 72. A longitudinal key 63 with a shape corresponding to that of the guide 73 is formed projecting from the central shaft 62. The key 63 extends along the hollow shaft 72 by an amount sufficient to ensure continuity of engagement with the guide 73 in any operating condition. Owing to engagement of the key 63 inside the guide 73, the hollow shaft 62 transmits the rotational movement produced by the second motor means 71 to the central shaft 62 and, therefore, to the support base 4.

Advantageously, the distribution means 3 of the machine 1 according to the present invention can be moved by kinematic means 8 so as to assume several supply positions along surface portions of the cake T so as to be able to sprinkle the granular product G either over the whole surface of the cake T or only over some portions thereof, such as for example its side surface or its top surface.

In the embodiment which is shown in the accompanying figures, the movement of the distribution means 3, which in case in question are represented by the rotor 31, consists in a substantially vertical translation parallel to the side surface of the cake T so as to sprinkle the granular product G over at least one portion of this side surface or over the whole side surface by means of several passes with the distribution means at different heights.

In more detail, the kinematic means 8 consist of at least one linear actuator 81 which is actuated by third motor means 82 and is mechanically associated with the first horizontal surface 26 on which the rotor 31 is in turn mounted.

Advantageously the distribution means 3 are able to be moved towards or away from the side surface of the cake T by means of adjustable positioning means (not shown in the accompanying drawings), such as for example spacer elements which are arranged between the two frames 21,22 and define the relative position of the distribution means 3 on the first horizontal surface 26 and of the cake T on the support surface 4.

Advantageously, the machine 1 according to the present invention is provided with a screening element 9 for protecting the top surface of the cake T from the flow of granular product generated by the distribution means 3 and with adjusting means operating said screening element so as to vary the screened surface of said cake T.

In the embodiment of the machine 1 according to Figure 1, the screening element 9 consists of a box-shaped structure 91 provided with an opening 92 which is able to receive said cake T from the side of its top surface. The box-shaped structure 91 is supported by a frame 93 above the support base 4 in a position which is adjustable heightwise and horizontally by means of a first vertical arm 94 and a second horizontal arm 95 of the frame 93.

As can be seen in Figure 1, the granular product is supplied to the distribution means 3 by means of a system for supplying the granular product G, which consists of a hopper 50 and a conveying channel 51. The latter is connected at a first end to the hopper 50 and at its second end to the rotor 31.

In more detail, according to the embodiment illustrated, the conveying channel 51 is a vibrating surface which causes the granular product G to fall into funnel 52 connected to the opening 36 supplying the said rotor 31.

The granular product which does not manage to adhere to the surface of the cake T is recovered by a collection system which consists, in particular, of at least one extractable drawer situated underneath the support base 4.

The machine 1 according to the present invention may advantageously be used along a line for production of cakes T. Upstream of the machine 1 it is possible to envisage, for example, a station for assembly of the basic ingredients of the cakes and a station where spreading of a layer of creamy preparation on the side surface of the cakes is performed. Downstream it is possible to envisage, for example, other stations for completing decoration or also solely for packing the said cakes.

For this purpose, the machine 1 is provided with transportation means, for example conveyor belts, for conveying the cake T between said stations and in particular from an entrance opening 101 to an exit opening 102 (shown in Figure 2) of the machine in question, causing said food product to pass in the vicinity of the means 3 for distributing the granular product G.

The support base 4 is able to receive from or transfer to said transportation means the cake T when it is located in the abovementioned rest position. As can be seen in Figure 2, in this rest position the arms 41 of the support base 4 are inserted in the free spaces existing in the parallel-belt structure of the conveyor 100.

The cake T is stopped when it is above the support base 4 by stopping means (not shown in the Figures). These stopping means are formed, for example, by an engaging element which projects from the conveyor belt 100 when the cake T arrives and retracts when the cake T must pass through the exit opening. Alternatively a proximity sensor may be usefully used.

The support base 4 is raised with respect to said transportation means when it is in the operating position. In this position the arms 41 do not interfere with the transportation means and in particular with the conveyor belt 100 during their rotational movement.

Advantageously a system for controlling operation of the machine 1 is envisaged, said system being based on a PLC (Programmable Logic Controller) which controls operation of the various devices in accordance with controlled operating steps.

The PLC basically coordinates the various operating steps of the machine 1.

When the cake T passes through the entrance opening, the PLC activates the stopping means which stop the cake T above the support base 4 in the rest position and at the same time interrupts the movement of the conveyor belt 100.

At this point the translation means 6 are firstly activated so as to bring the support base 4 into the operating position, followed by activation of the rotation means 7 which cause it to rotate.

At this point the distribution means 3 are activated so as to generate the flow of granular product G onto the side surface of the rotating cake T.

The PLC then activates kinematic means 8 which displace the distribution means 3 with respect to the side surface of the cake T.

Once distribution of the granular product G onto the cake T has been completed, rotation of the support base 4 is stopped and the latter returns into the rest position.

The PLC deactivates the stopping means and reactivates the conveyor belt which picks up the cake T from the support base 4 and causes it to pass through the exit opening towards any operating stations situated downstream.

With the machine according to the invention it is possible to decorate the side surface of cakes of any height owing to the possibility of varying the position of the distribution means along the whole extension of the side surface of the cake T.

The distribution means are also able to ensure a highly uniform distribution of the granular product over the whole portion of the side surface being processed, thus reducing the quantity of granular product to be recycled.

The machine is very flexible in terms of its operation and is able to incorporate the operation of decorating the side surface of cakes within automated production lines.

## Claims

1. Machine for decorating a food product, in particular a cake (T) having at least one side surface and a top surface, with an ingredient in granular form (G), said machine comprising :
- a support structure (2);
- distribution means (3) mounted on said support structure (2) and able to project said ingredient in granular form (G) in at least one direction of flow;
- a support base (4) suitable for supporting said food product (T);
- movement means (5) mechanically connected to said support base (4) so as to cause rotation of said food product (T) in the vicinity of said distribution means (3) and in such a way as to interfere with said flow so as to sprinkle said ingredient in granular form (G) over at least one portion of the surface of said food product (T) ;
wherein said distribution means (3) comprise at least one rotor (31) , actuated by first motor means (32) and seated inside a housing (34) which has at least one supply mouth (35) for forming said flow of said granular ingredient (G);
**characterized in that** said rotor is provided with a plurality of radial blades (37), and said distribution means comprise Kinematic means and are movable by said kinematic means (8) so as to assume several supply positions determined by their movement along at least one portion of the side or top surface of said food product (T).

2. Machine according to Claim 1, in which said movement means (5) comprise translation means (6) and rotation means (7), said translation means (6) being able to move said support base (4) between a rest position, for loading and unloading said food product (T), and an operating position in which said food product (T) is made to rotate by said rotation means (7).

3. Machine according to Claim 2, in which said food product (T) has at least one side surface and a top surface and in which said distribution means (3) project said flow substantially over said side surface.

4. Machine according to Claim 1, in which said movement along at least one portion of the side or top surface of said food product (T) is a translation which is substantially vertical and parallel to the side surface of said food product (T) so as to sprinkle said ingredient in granular form (G) over at least one portion of said side surface.

5. Machine according to Claim 1, in which said each radial blade (37) comprises a first portion (38) which extends along the lie of a radial plane parallel to the axis of rotation and a second portion (39) which is inclined with respect to the first portion with a different inclination and orientation of adjacent blades so as to create a uniform flow along the whole extension of the supply mouth (35).

6. Machine according to any one of the preceding claims, in which said distribution means (3) are able to be moved towards or away from said side surface by means of adjustable positioning means.

7. Machine according to Claim 1, in which said kinematic means (8) comprise at least one linear actuator (81) mechanically associated with said distribution means (3) so as to cause movement thereof.

8. Machine according to any one of the preceding claims, in which said support base (4) comprises a plurality of arms (41) each connected at one end to a central transmission shaft (62) which receives its movement from said movement means (5).

9. Machine according to any one of the preceding claims, which can be inserted in particular along a line for production of said food product and which comprises transportation means (100) for conveying said food product (T) from an entrance opening to an exit opening, causing said food product (T) to pass in the vicinity of said distribution means (3).

10. Machine according to Claims 2 and 8, in which said support base (4) is able to receive from or transfer to said transportation means (100) said food product (T) when it is in said rest position and in which said support base (4) is raised with respect to said transportation means (100), not interfering therewith when it is in said operating position.

11. Machine according to Claim 10, having stopping means situated in the vicinity of said support base (4) so as to allow stoppage and loading of said food product (T) onto said support base (4).

12. Machine according to Claim 1 or 3, comprising a screening element (9) for protecting said top surface of said food product (T) from the flow of said ingredient in granular form (G).

13. Machine according to Claim 12, in which said screening element (9) comprises a box-shaped structure (91) provided with an opening (92) for receiving said food product (T) from the side of said top surface.

14. Machine according to Claim 12 or 13, comprising adjusting means (93, 94, 95) operating said screening element (9) so as to vary the screened surface area of said food product (T).

15. Machine according to any one of the preceding claims, provided with a system for collecting said ingredient in granular form (G) which has not adhered to the surface of said food product (T) after being projected by said distribution means (3).

16. Machine according to Claim 15, in which said collecting system comprises at least one extractable drawer situated underneath said support base (4).

17. Machine according to any one of the preceding claims, provided with a system for supplying said ingredient in granular form (G), comprising at least one hopper (50) and at least one conveying channel (51) connected at a first end to said hopper (50) and at its second end to said distribution means (3).

18. Machine according to claim 17, in which said conveying channel (51) is suitable for conveying said ingredient in granular form (G) to a funnel (52) connected to a supply opening (36) of said rotor (31).

19. Machine according to Claim 17 or 18, in which said conveying channel (51) is a vibrating surface.

## Patentansprüche

1. Maschine zur Verzierung eines Lebensmittels, insbesondere eines Kuchens (T) - die mindestens eine Seitenfläche und eine Oberseite besitzt -mit einer Zutat in körniger Form (G), wobei die Maschine folgendes aufweist:
- eine Tragkonstruktion (2);
- Verteilelemente (3), die an der Tragkonstruktion (2) befestigt sind, und die Zutat in körniger Form (G) in mindestens eine Fließrichtung spritzen oder schleudern können;
- einen Träger (4) zum Halten des Lebensmittels (T);
- Bewegungselemente (5), die mit dem Träger (4) mechanisch verbunden sind, so dass es zu einer Drehung des Lebensmittels (T) in der Nähe der Verteilelemente (3) kommt und in die Durchflussmenge eingegriffen wird, damit mindestens ein Teil der Oberseite des Lebensmittels (T) mit der Zutat in körniger Form (G) bespritzt wird;
wobei die Verteilelemente (3) mindestens einen Rotor (31) aufweisen, der durch erste Motorelemente (32) angetrieben wird und sich in einem Gehäuse (34) befindet, das mindestens eine Zufuhröffnung (35) besitzt, um die Durchflussmenge der körnigen Zutat (G) zu bilden;
**dadurch gekennzeichnet, dass** der Rotor mit einer Vielzahl radialer Schaufeln (37) versehen ist, und dass die Verteilelemente (3) kinematische Elemente (8) besitzen und durch die kinematischen Elemente (8) verstellbar sind, um verschiedene Zufuhrpositionen einzunehmen, die durch ihre Bewegung entlang mindestens eines Teils der Seitenfläche oder Oberseite des Lebensmittels (T) bestimmt werden.

2. Maschine nach Anspruch 1, wobei die Bewegungselemente (5) Verschiebeelemente (6) und Drehelemente (7) besitzen, und die Verschiebeelemente (6) in der Lage sind, den Träger (4) zwischen einer Ruheposition zum Laden und Entladen des Lebensmittels (T) und einer Betriebsposition zu bewegen, in der das Lebensmittel (T) mit Hilfe der Drehelemente (7) gedreht wird.

3. Maschine nach Anspruch 2, wobei das Lebensmittel (T) mindestens eine Seitenfläche und eine Oberseite besitzt, und wobei die Durchflussmenge mit Hilfe der Verteilelemente (3) im wesentlichen über die Seitenfläche gespritzt oder geschleudert wird.

4. Maschine nach Anspruch 1, wobei es sich bei der Bewegung entlang mindestens eines Teils der Seitenfläche oder Oberseite des Lebensmittels (T) um eine Verschiebung handelt, die im wesentlichen vertikal und parallel zu der Seitenfläche des Lebensmittels (T) erfolgt, so dass die Zutat in körniger Form (G) über mindestens einen Teil der Seitenfläche gespritzt oder geschleudert wird.

5. Maschine nach Anspruch 1, wobei jede radiale Schaufel einen ersten Teil (38) aufweist, der entlang der Linie einer radialen Ebene parallel zu der Drehachse verläuft, sowie einen zweiten Teil (39), der in Bezug auf den ersten Teil mit unterschiedlicher Neigung und Ausrichtung aneinander angrenzender Schaufeln geneigt ist, so dass entlang der gesamten Ausdehnung der Zufuhröffnung (35) eine gleichmäßige Durchflussmenge erzeugt wird.

6. Maschine nach einem der vorhergehenden Ansprüche, wobei die Verteilelemente (3) mit Hilfe verstellbarer Positionierelemente in Richtung der Seitenfläche bewegt oder von ihr weg bewegt werden können.

7. Maschine nach Anspruch 1, wobei die kinematischen Elemente (8) mindestens einen linearen Stellantrieb (81) bilden, der mechanisch mit den Verteilelementen (3) verbunden ist, um deren Bewegung hervorzurufen.

8. Maschine nach einem der vorhergehenden Ansprüche, wobei der Träger (4) eine Vielzahl von Armen (41) aufweist, die jeweils an einem Ende mit einer zentralen Übertragungswelle (62) verbunden sind, die ihre Bewegung von den Bewegungselementen (5) erhält.

9. Maschine nach einem der vorhergehenden Ansprüche, die insbesondere entlang einer Straße zur Herstellung des Lebensmittels (T) eingeschoben werden kann, und die Transportelemente (100) zum Befördern des Lebensmittels (T) von einer Eingangsöffnung zu einer Austrittsöffnung besitzt, so dass das Lebensmittel (T) in der Nähe der Verteilelemente (3) verläuft.

10. Maschine nach Anspruch 2 und 8, wobei der Träger (4) das Lebensmittel (T) von den Transportelementen (100) erhalten oder es an diese überführen kann, wenn er sich in der Ruheposition befindet, und wobei der Träger (4) in Bezug auf die Transportelemente (100) angehoben wird, und nicht eingreift, wenn er sich in der Betriebsposition befindet.

11. Maschine nach Anspruch 10 mit Stoppelementen, die in der Nähe des Trägers (4) angebracht sind, um ein Anhalten und Laden des Lebensmittels (T) auf den Träger (4) zu ermöglichen.

12. Maschine nach Anspruch 1 oder 3 mit einem Abschirmelement (9), um die Oberseite des Lebensmittels (T) vor dem Durchfluss der Zutat in körniger Form (G) zu schützen.

13. Maschine nach Anspruch 12, wobei das Abschirmelement (9) einen kastenförmigen Aufbau (91) besitzt, der mit einer Öffnung (92) zur Aufnahme des Lebensmittels (T) von der Seite der Oberseite versehen ist.

14. Maschine nach Anspruch 12 oder 13 mit Verstellelementen (93, 94, 95) für das Abschirmelement (9), um die abgeschirmte Fläche des Lebensmittels (T) zu variieren.

15. Maschine nach einem der vorhergehenden Ansprüche, die mit einem System zum Auffangen der Zutat in körniger Form (G) versehen ist, die nicht an der Oberfläche des Lebensmittels (T) haften geblieben ist, nachdem sie durch die Verteilelemente (3) aufgespritzt oder aufgeschleudert wurde.

16. Maschine nach Anspruch 15, wobei das Auffangsystem mindestens einen herausziehbaren Einschub besitzt, der sich unter dem Träger (4) befindet.

17. Maschine nach einem der vorhergehenden Ansprüche, die mit einem System zur Zufuhr der Zutat in körniger Form (G) versehen ist, und mindestens einen Trichter (50) und mindestens einen Förderkanal (51) besitzt, der an einem ersten Ende mit dem Trichter (50) und an seinem zweiten Ende mit den Verteilelementen (3) verbunden ist.

18. Maschine nach Anspruch 17, wobei der Förderkanal (51) dazu geeignet ist, die Zutat in körniger Form (G) zu einem Fülltrichter (52) zu befördern, der mit einer Zufuhröffnung (36) des Rotors (31) verbunden ist.

19. Maschine nach Anspruch 17 oder 18, wobei es sich bei dem Förderkanal (51) um eine vibrierende Fläche handelt.

## Revendications

1. - Machine de décoration d'un produit alimentaire, en particulier d'un gâteau (T) ayant au moins une surface latérale et une surface supérieure, par un ingrédient sous forme granulaire (G), ladite machine comprenant :
- une structure de support (2) ;
- des moyens de distribution (3) montés sur ladite structure de support (2) et aptes à projeter ledit ingrédient sous forme granulaire (G) dans au moins une direction d'écoulement ;
- une base de support (4) appropriée pour supporter ledit produit alimentaire (T) ;
- des moyens de déplacement (5) reliés mécaniquement à ladite base de support (4) de façon à provoquer une rotation dudit produit alimentaire (T) au voisinage desdits moyens de distribution (3) et de façon à interférer avec ledit écoulement afin de saupoudrer ledit ingrédient sous forme granulaire (G) sur au moins une partie de la surface dudit produit alimentaire (T) ;
lesdits moyens de distribution (3) comprenant au moins un rotor (31), actionnés par des premiers moyens de moteur (32) et reçus à l'intérieur d'un boîtier (34) qui comporte au moins une embouchure d'alimentation (35) pour former ledit écoulement dudit ingrédient granulaire (G) ;
**caractérisée par le fait que** ledit rotor comporte une pluralité de pales radiales (37), et que lesdits moyens de distribution comprennent des moyens cinématiques et sont déplaçables par lesdites moyens cinématiques (8) de façon à prendre plusieurs positions d'alimentation déterminées par leur déplacement le long d'au moins une partie de la surface latérale ou supérieure dudit produit alimentaire (T).

2. - Machine selon la revendication 1, dans laquelle lesdits moyens de déplacement (5) comprennent des moyens de translation (6) et des moyens de rotation (7), lesdits moyens de translation (6) étant aptes à déplacer ladite base de support (4) entre une position de repos, pour charger et décharger ledit produit alimentaire (T), et une position de fonctionnement dans laquelle ledit produit alimentaire (T) est amené à tourner par lesdits moyens de rotation (7).

3. - Machine selon la revendication 2, dans laquelle ledit produit alimentaire (T) comporte au moins une surface latérale et une surface supérieure et dans laquelle lesdits moyens de distribution (30) projettent ledit écoulement sensiblement sur ladite surface latérale.

4. - Machine selon la revendication 1, dans laquelle ledit déplacement le long d'au moins une partie de la surface latérale ou supérieure dudit produit alimentaire (T) est une translation qui est sensiblement verticale et parallèle à la surface latérale dudit produit alimentaire (T) de façon à saupoudrer ledit ingrédient sous forme granulaire (G) sur au moins une partie de ladite surface latérale.

5. - Machine selon la revendication 1, dans laquelle chaque pale radiale précitée (37) comprend une première partie (38) qui s'étend le long de l'étendue d'un plan radial parallèle à l'axe de rotation et une seconde partie (39) qui est inclinée par rapport à la première partie avec des inclinaison et orientation différentes de pales adjacentes de façon à créer un écoulement uniforme le long de la totalité de l'étendue de l'embouchure d'alimentation (35).

6. - Machine selon l'une quelconque des revendications précédentes, dans laquelle lesdits moyens de distribution (3) sont aptes à être déplacés vers ou à l'opposé de ladite surface latérale à l'aide de moyens de positionnement ajustables.

7. - Machine selon la revendication 1, dans laquelle lesdits moyens cinématiques (8) comprennent au moins un actionneur linéaire (81) mécaniquement associé auxdits moyens de distribution (3) de façon à provoquer un déplacement de ceux-ci.

8. - Machine selon l'une quelconque des revendications précédentes, dans laquelle ladite base de support (4) comprend une pluralité de bras (41), chacun étant relié à une extrémité à un arbre de transmission central (62) qui reçoit son mouvement desdits moyens de déplacement (5).

9. - Machine selon l'une quelconque des revendications précédentes, qui peut être introduite en particulier le long d'une chaîne de production dudit produit alimentaire et qui comprend des moyens de transport (100) pour transporter ledit produit alimentaire (T) d'une ouverture d'entrée à une ouverture de sortie, amenant ledit produit alimentaire (T) à passer au voisinage desdits moyens de distribution (3).

10. - Machine selon les revendications 2 et 8, dans laquelle ladite base de support (4) est apte à recevoir en provenance des ou à transférer auxdits moyens de transport (100) ledit produit alimentaire (T) lorsqu'il se trouve dans ladite position de repos et dans laquelle ladite base de support (4) est élevée par rapport auxdits moyens de transport (100), n'interférant pas avec ceux-ci lorsqu'elle se trouve dans ladite position de fonctionnement.

11. - Machine selon la revendication 10, comportant des moyens d'arrêt situés au voisinage de ladite base de support (4) de façon à permettre l'arrêt et le chargement dudit produit alimentaire (T) sur ladite base de support (4).

12. - Machine selon l'une des revendications 1 ou 3, comprenant un élément d'écran (9) pour protéger ladite surface supérieure dudit produit alimentaire (T) de l'écoulement dudit ingrédient sous forme granulaire (G).

13. - Machine selon la revendication 12, dans laquelle ledit élément d'écran (9) comprend une structure en forme de boîte (91) comportant une ouverture (92) pour recevoir ledit produit alimentaire (T) à partir du côté de ladite surface supérieure.

14. - Machine selon l'une des revendications 12 ou 13, comprenant des moyens d'ajustement (93, 94, 95) actionnant ledit élément d'écran (9) de façon à faire varier l'aire de surface protégée par écran dudit produit alimentaire (T).

15. - Machine selon l'une quelconque des revendications précédentes, comportant un système pour recueillir ledit ingrédient sous forme granulaire (G) qui n'a pas adhéré à la surface dudit produit alimentaire (T) après avoir été projeté par lesdits moyens de distribution (3).

16. - Machine selon la revendication 15, dans laquelle ledit le système de collecte comprend au moins un tiroir extractible, situé au-dessous de ladite base de support (4).

17. - Machine selon l'une quelconque des revendications précédentes, comportant un système d'alimentation dudit ingrédient sous forme granulaire (G), comprenant au moins une trémie (50) et au moins un canal de transport (51) relié à une première extrémité à ladite trémie (50) et à sa seconde extrémité auxdits moyens de distribution (3).

18. - Machine selon la revendication 17, dans laquelle ledit canal de transport (51) est approprié pour transporter ledit ingrédient sous forme granulaire (G) dans un entonnoir (52) relié à une ouverture d'alimentation (36) dudit rotor (31).

19. - Machine selon l'une des revendications 17 ou 18, dans laquelle ledit canal de transport (51) est une surface vibrante.
